# EUROPÄISCHE PATENTSCHRIFT

(11) **EP 0 935 181 B1**
(45) Veröffentlichungstag und Bekanntmachung des Hinweises auf die Patenterteilung: **31.10.2001**
(21) Anmeldenummer: 99100370.8
(22) Anmeldetag: 15.01.1999
(51) Int. Cl.: G05D 23/19, G05B 13/02

(54) **Selbstlernendes Regelverfahren und selbstlernendes Regelsystem zur Regelung einer Temperiereinrichtung**
Self-learning control method and self-learning control system for the control of a tempering device
Procédé et dispositif de régulation par auto-apprentissage pour un système de chauffage

(30) Priorität: 05.02.1998 DE 19804565
(43) Veröffentlichungstag der Anmeldung: 11.08.1999
(73) Patentinhaber: Kummerer, Christoph, Dr., 82131 Gauting (DE); Kummerer, Norbert, 85778 Haimhausen (DE)
(72) Erfinder: Kummerer, Christoph, Dr., 82131 Gauting (DE); Kummerer, Norbert, 85778 Haimhausen (DE)
(74) Vertreter: Schwepfinger, Karl-Heinz, Dipl.-Ing.

(56) Entgegenhaltungen:
- GB-A- 2 222 006
- US-A- 4 771 392
- US-A- 5 192 020
- US-A- 5 555 927

## Beschreibung

Die Erfindung betrifft ein selbstlernendes Regelverfahren zur Regelung einer Temperiereinrichtung zum Zu- oder Abführen von Wärme zu oder aus einem Raum, Gegenstand, Gas oder einer Flüssigkeit.

Solche selbstlernenden Regelverfahren sind nicht bekannt. Bekannt sind zur Regelung von Raumheizungsanlagen selbstoptimierende Regelsysteme, bei welchen allerdings vom Benutzer eine Reihe von Angaben über die Art der Heizung, die Vorlauftemperatur, die Wärmeverluste bei unterschiedlicher Innen- und Außentemperatur etc. eingegeben werden müssen. Insbesondere bei sehr träge reagierenden Systemen, wie sie in der Regel die üblichen im privaten Bereich verwendeten Haus-und Wohnungsheizungen darstellen, sowie beim Anfahren geänderter Solltemperaturen, können diese selbstoptimierenden Regler ein relativ starkes Überschwingen der Temperatur über und unter die Solltemperatur nicht verhindern. Außerdem ist das Voreinstellen der Regelparameter im Einzelfall oftmals sehr kompliziert, und es erfordert viele Versuche, bis eine einigermaßen befriedigende Funktionsweise gefunden ist.

Daneben sind zur Regelung von Heizkörpern für Wohnräume Thermostate bekannt, welche die Heizung z. B. über ein Ventil oder eine Umlaufpumpe ein- und ausschalten, sobald eine bestimmte Solltemperatur unter- oder überschritten wird. Die Hysterese zwischen beiden Schaltpunkten beträgt üblicherweise 0,5-1 °C, bei einfachenThermostatventilen für Heizkörper auch bis zu 2 °C. Das Schaltverhalten dieser Thermostatregler führt dazu, daß die Raumtemperatur stark schwankt, weil die Heizungsanlage erst stark verzögert auf die Steuersignale des Reglers reagiert. Schaltet der Thermostat die Heizung beispielsweise aus, gibt der zu diesem Zeitpunkt noch heiße Heizkörper noch viele Minuten lang weiter Wärme an den Raum ab, so daß die Raumtemperatur deutlich über die Solltemperatur ansteigt. Schaltet der Regler im umgekehrten Fall die Heizung ein, dauert es einige Zeit, bis die Heizkörper warm werden, währenddessen die Raumtemperatur noch weiter unter die Solltemperatur absinkt. Die konstruktionsbedingte notwendige relativ große Hysterese der Thermostatregler verstärkt dieses Über- und Unterschwingen noch.

Davon ausgehend liegt der Erfindung die Aufgabe zugrunde, ein selbstlernendes Regelverfahren anzugeben, bei dem Angaben über die Art der Heizung oder Kühlung, über Umweltbedingungen, insbesondere über Temperaturverluste zwischen dem zu heizenden Raum, Gegenstand, Gas oder der Flüssigkeit und der kälteren Umgebung bzw. über die Wärmeübertragung von der wärmeren Umgebung auf den zu kühlenden Raum, Gegenstand, Gas oder der Flüssigkeit nicht erforderlich sind, und welche nicht nur ein sehr genaues Einhalten einer vom Benutzer gewünschten Solltemperatur gewährleisten, sondern auch ein schnelles Erreichen dieser Solltemperatur ohne starkes Über- oder Unter-schwingen über oder unter die Solltemperatur ermöglichen. Zudem soll das Verfahren auch bei bereits bestehenden Heiz- oder Kühlanlagen anwendbar bzw. ohne großen Aufwand nachrüstbar sein.

### (zu 1.)

Die Aufgabe wird zum einen gelöst von einem selbstlernenden Regelverfahren zur Regelung einer Temperiereinrichtung zum Zu- oder Abführen von Wärme zu oder aus einem Raum, Gegenstand, Gases oder einer Flüssigkeit, wobei ein maximaler Temperatursollwert (Soll-Max) und ein minimaler Temperatursollwert (Soll-Min) vorgegeben wird und der zeitliche Verlauf der Ist-Temperatur des Raums, Gegenstands, Gas oder der Flüssigkeit regelmäßig gemessen wird, mit den folgenden Schritten:
a) Festlegen eines n-ten Einschaltzeitpunktes (t-ein(n)), zu dem die Temperiereinrichtung (10) eingeschaltet wird,
b) Festlegen eines n-ten Ausschaltzeitpunktes (t-aus(n)), zu dem die Temperiereinrichtung (10) ausgeschaltet wird,
c) Erfassen der sich nach dem Einschalten der Temperiereinrichtung (10) ergebenden beiden n-ten Extremwerte (Ist-Max(n) und Ist-Min(n)) im Ist-Temperaturverlauf, in denen die Ist-Temperatur ein lokales Minimum und ein lokales Maximum hat,
d) Ermitteln der 1. Ableitung des Temperaturverlaufs nach der Zeit im n-ten Einschaltzeitpunkt (t-ein(n)),
e) Ermitteln derjenigen optimalen n-ten Ein- und Ausschaltzeitpunkte (t-optein(n) und t-optaus(n)) aus den Werten des n-ten Ausschaltzeitpunktes (t-aus(n)) und des n-ten Einschaltzeitpunktes (t-ein(n)), den beiden n-ten Extremwerten im Temperaturverlauf (Ist-Max(n), Ist-Min(n)) und der 1. Ableitung des Temperaturverlaufs nach der Zeit im n-ten Einschaltzeitpunkt (t-ein(n)), bei denen für den n-ten Extremwert (Ist-Max(n)) ein lokales Maximum im Temperaturverlauf gleich dem vorgegebenen maximalen Temperatursollwert (Soll-Max(n)) und für den n-ten Extremwert (Ist-Min(n)) ein lokales Minimum im Temperaturverlauf gleich dem vorgegebenen minimalen Temperatursollwert (Soll-Min(n)) erreicht wird.
f) Inkrementieren von n um 1 und Wiederholen der Schritte a) bis f), wobei die ermittelten n-ten Ein- und Ausschaltzeitpunkte (t-optein(n) und t-optaus(n)) sowie die 1. Ableitung des Temperaturverlaufs nach der Zeit im n-ten Einschaltzeitpunkt (t-ein(n)) bei der Festlegung der n+1 Einschalt- und Ausschaltzeitpunkte (t-ein(n+1) und t-aus(n+1)) berücksichtigt werden.

Die Erfindung beruht also auf dem Grundgedanken, daß die Temperatur eines zu beheizenden oder zu kühlenden Raumes, Gegenstands, Gas oder einer Flüssigkeit aufgrund der Trägheit des Heiz- oder Kühlsystems und der Umgebungsverluste immer Schwingungen um den eigentlich gewünschten Sollwert ausführen wird. Während bei einfachen Thermostaten nur ein Sollwert vorgegeben wird, bei dessen Überschreiten die Heizung ausgeschaltet und bei dessen Unterschreiten die Heizung eingeschaltet wird, werden bei dem erfindungsgemäßen Regelverfahren zwei Sollwerte vorgegeben, die die maximale Amplitude der Schwingungen um den letztendlich gewünschten Temperaturwert markieren, wobei die Reaktion des Raumes, Gegenstands, Gas oder der Flüssigkeit auf ein Heizen oder Kühlen automatisch erfaßt und bei dem nächsten Einschalten der Heiz- oder Kühlanlage berücksichtigt werden. Das Verfahren lernt also die zur optimalen Regelung der jeweiligen Temperiereinrichtung notwendigen Parameter selbst, ohne daß der Benutzer ihm diese vorgeben müßte. Stellt das Verfahren z. B. fest, daß ein Heizkörper nach dem Abschalten noch relativ viel Wärme an den zu beheizenden Raum abgibt, so daß die Ist-Temperatur die vorgegebene maximale Soll-Temperatur übersteigt, so wird der Heizkörper beim nächsten Heizzyklus entsprechend früher ausgeschaltet.

Ein großer Vorteil des Verfahrens ist, daß es zur Regelung aller Arten von Temperiereinrichtungen verwendet werden kann, wie z. B. Öl-, Gas-, Elektroheizungen, Heizlüfter, Heizspiralen, von Heiz- oder Kühlmittel durchflossene Heiz- oder Kühlkörper, insbesondere auch Kühlkörper von Kühlschränken, Kühl-und Klimaanlagen etc. Auch spielt es für das Verfahren keine Rolle, ob einem Raum oder einem Gegenstand Wärme zu- oder aus diesen abgeführt werden soll: Das Verfahren kann zur Regelung von Temperiereinrichtungen für Häuser, Hallen, Zimmer, Zelte, Innenräume von Fahrzeugen, Backöfen, Innenräume von Kühlschränken, Kühlhallen, Kühlanhänger für Lastkraftwagen und Züge etc. verwendet werden, da es die zur optimalen Regelung notwendigen Umgebungsparameter automatisch ermittelt.

### (zu 2.)

Bei einer besonders einfachen Durchführungsform des Regelverfahrens wird bei unveränderten Sollwerten Soll-Max und Soll-Min der (bezüglich des Temperaturverlaufs) relative Einschaltzeitpunkt t-ein(n+1) = t-optein(n) und/oder der relative Ausschaltzeitpunkt t-aus(n+1) = t-optaus(n) gesetzt. Es ist natürlich klar, daß anstelle des relativen Einschaltzeitpunkts auch mit dem absoluten Einschaltzeitpunkt gearbeitet werden kann, wobei dann natürlich noch ein konstanter Zeitfaktor zu den Werten t-optein(n) bzw. t-optaus(n) addiert werden muß; mit anderen Worten: das Verfahren kann entweder so durchgeführt werden, daß jeweils relative optimale Ein- und Ausschaltzeitpunkte für die Temperiereinrichtung ermittelt werden, wobei es sich als zweckmäßig erwiesen hat, den Einschaltzeitpunkt der Temperiereinrichtung relativ zur Ist-Temperatur zu bestimmen (also z. B. Einschalten bei 20 °C) und den Ausschaltzeitpunkt relativ zum Einschaltzeitpunkt (also z. B. Ausschalten nach 5 min.), oder aber mit absoluten Zeiten zu arbeiten (also z. B. Einschalten um 12.05 Uhr, Ausschalten um 12. 10 Uhr etc.).

### (zu 3.)

Die Stabilität der Regelung kann weiter erhöht werden, wenn zuzätzlich der zeitliche Abstand ermittelt wird zwischen dem Einschaltzeitpunkt (t-ein(n)) und dem lokalen Minimum (Ist-Min(n)), wenn die Temperiereinrichtung (10) zum Heizen verwendet wird, bzw. zwischen dem Einschaltzeitpunkt (t-ein(n)) und dem lokalen Maximum (Ist-Max(n)), wenn die Temperiereinrichtung (10) zum Kühlen verwendet wird. Dieser zeitliche Abstand wird beim Festlegen des n+1ten Ausschaltzeitpunktes (t-aus(n+1)) zusätzlich berücksichtigt. Zweckmäßigerweise wird hierzu der n+1te Ausschaltzeitpunkt (t-aus(n+1)) so festgelegt, daß sich eine Einschaltdauer der Temperiereinrichtung von mindestens dem genannten zeitlichen Anstand multipliziert mit einem Korrekturfaktor ergibt.

### (zu 4.)

Eine zweckmäßige Variante des Regelverfahrens sieht vor, daß nach dem Einschalten der Temperiereinrichtung im Einschaltzeitpunkt (t-ein(n)) die 1. Ableitung des Temperaturverlaufs nach der Zeit fortlaufend ermittelt wird und die Temperiereinrichtung nur dann ausgeschaltet wird, wenn
- der festgelegte Ausschaltzeitpunkt (t-aus(n)) verstrichen ist und
- im Falle des Heizens ein lokales Minimum im Temperaturverlauf (Ist-Min(n)), bzw. im Falle des Kühlens ein lokales Maximum im Temperaturverlauf (Ist-Max(n)) aufgetreten ist und
- die 1. Ableitung des Temperaturverlaufs nach der Zeit im Falle des Heizens größer bzw. im Falle des Kühlens kleiner als ein festgelegter Wert ist und
- die aktuelle Ist-Temperatur im Falle des Heizens größer als der minimale Temperatursollwert (Soll-Min), bzw. im Falle des Kühlens kleiner als der maximale Temperatursollwert (Soll-Max) ist.

### (zu 5.)

Das Regelverfahren kann auch vorteilhaft vereinfacht werden, indem auf die Ermittlung eines Ausschaltzeitpunkt (t-aus(n)) verzichtet wird, und das Ausschalten der Temperiereinrichtung nur vom Passieren eines lokalen Maximum oder Minimums, einer bestimmten Mindeststeigung der Temperaturkurve und dem Erreichen des minimalen Temperatursollwertes abhängig gemacht wird.

### (zu 6. + 7.)

Bei einer bevorzugten Ausführungsform des Verfahrens werden zur Bestimmung des Einschaltzeitpunkts t-ein(n+1) wenigstens die drei Werte t-optein(n), t-optein(n-1) und t-optein(n-2) der Größe nach angeordnet und "median-gefiltert" d. h., es wird der mittlere Wert als Wert für t-ein(n+1) ausgewählt. Eine solche Median-Filterung hat den Vorteil, sogenannte, "Ausreißer" zu glätten, gleichzeitig aber tatsächliche Änderungen der Umweltbedingungen zu erfassen und die Regelung entsprechend nachzustellen: Wird z. B. bei sehr kalten Außentemperaturen ein Fenster für eine kurze Zeit geöffnet, so kann es sein, daß sich der nach dem Beenden eines Heizzyklus ergebende Temperaturmaximalwert Ist-Max nicht dem gewählten Soll-Wert Soll-Max annähert oder aber, daß sich zwar der tatsächliche Ist-Wert dem Soll-Wert annähert, daß aber ein die Ist-Temperatur erfassender Temperaturmeßfühler so unglücklich in der Nähe des geöffneten Fensters angeordnet ist, daß er irrtümlich eine zu niedrige Raumtemperatur erfaßt.

Damit nun das kurzzeitige Öffnen des Fensters nicht zu einem Überheizen des Raumes beim nächsten Heizzyklus führt, werden die letzten wenigstens drei berechneten optimalen Einschaltund Ausschaltzeitpunkte jeweils ihrer Größe nach angeordnet und es werden jeweils die mittleren dieser Werte als nächste Einschalt- und Ausschaltzeitpunkte übernommen, so daß also "Ausreißer" die Regelung nicht beeinflussen. Ändern sich dagegen die Umweltbedingungen, kühlt es z. B. stark ab, so daß tatsächlich länger geheizt werden muß, um die erwünschten Soll-Temperaturen zu erreichen, so greifen diese veränderten Umweltbedingungen je nach Anzahl der für die Median-Filterung verwendeten berechneten optimalen Einschalt- und Ausschaltzeitpunkte bereits nach wenigen Zyklen durch. Werden z. B. jeweils drei Ein- und Ausschaltzeitpunkte der Größe nach angeordnet und jeweils der mittlere Wert ausgewählt, so führen veränderte Umweltbedingungen bereits ab dem zweiten Zyklus zu einer Umstellung auf die entsprechend geänderten neuen optimalen Ein- und Ausschaltzeitpunkte.

### (zu 8.)

Alternativ oder zusätzlich kann das Verfahren so ausgeführt werden, daß ein Grenzwert für die 1. Ableitung des Temperaturverlaufs nach der Zeit vorgegeben wird, bei dessen Über- oder Unterschreiten (was also einem plötzlichen besonders steilen Anstieg oder Abfallen der Temperatur z.B. aufgrund des Öffnens eines Fensters entspricht) die danach gemessenen Werte für die Bestimmung der optimalen Ein- und Ausschaltzeitpunkte bis zum Eintritt einer vorgebbaren Bedingung, insbesondere dem Unterschreiten einer absoluten Mindesttemperatur oder der Änderung des Temperaturverlaufs, nicht mehr berücksichtigt werden. Wird das Verfahren zur Regelung einer Raumheizung verwendet, kann dabei vorgesehen werden, daß die Heizung beim plötzlichen Temperaturabfall ausgeschaltet wird, bis ein Minimum im Temperaturverlauf erreicht ist. Auf diese Weise wird ein , "Zum-Fenster-hinaus-Heizen" zuverlässig verhindert.

### (zu 9.)

Das Verfahren kann vorteilhaft so angewendet werden, daß vom Benutzer nur ein Temperatur-Sollwert vorgegeben muß, aus dem die Werte von Soll-Max und Soll-Min automatisch bestimmt werden. Wird das Verfahren zur Regelung einer Heizung verwendet, gibt der Benutzer wie bei den bekannten Regelverfahren nur seine gewünschte mittlere Temperatur vor, aus welcher dann in Abhängigkeit von der Empfindlichkeit der verwendeten Geräte zur Bestimmung der Ist-Temperatur die Werte Soll-Min und Soll-Max bestimmt werden. Wird z. B. ein Temperaturfühler verwendet, der eine Genauigkeit von 0,05 °C besitzt, hat es sich als zweckmäßig erwiesen, den Abstand zwischen Soll-Min und Soll-Max zwischen 0,3 und 0,4 °c zu wählen, was also eine Regelungsgenauigkeit der Raumtemperatur von +/- 0,15 °c bzw. +/- 0,2 °C um den vom Benutzer gewünschten mittleren Sollwert ergibt. Je empfindlicher die verwendeten Temperaturmeßgeräte sind, desto größer die Regelungsgenauigkeit.

### (zu 10.)

Bei einer zweckmäßigen Durchführungsform des Verfahrens ist vorgesehen, daß die Sollwerte Soll-Max und Soll Min sowie die zu diesen Sollwerten jeweils zuletzt bestimmten Ein-und Ausschaltzeitpunkte t-ein(n) und t-aus(n) in einer Speichereinheit gespeichert werden und daß bei einer Änderung der Sollwerte die Speichereinheit daraufhin überprüft wird, ob zu den geänderten Sollwerten bereits Ein- und Ausschaltzeitpunkte gespeichert sind, welche dann für das erste Durchlaufen des Regelverfahrens mit den neuen Sollwerten als Ein- und Ausschaltzeitpunkte übernommen werden. Diese Durchführungsform ermöglicht ein besonders genaues Erreichen geänderter Solltemperaturen bereits beim ersten Durchlaufen eines Regelzyklus, ohne daß das Verfahren erst Informationen über mögliche optimale Ein- und Ausschaltzeitpunkte gewinnen muß, da diese bereits gespeichert sind.

### (zu 11. + 12. + 13.)

Eine vorteilhafte Durchführungsform des Verfahrens sieht vor, daß die Bestimmung von t-ein(n) und t-aus(n) mittels einer zentralen Auswerte- und Steuereinheit erfolgt, mittels welcher auch entsprechende Steuerbefehle zum Ein- und Ausschalten der Temperiereinrichtung erzeugt werden. Dabei können die Steuerbefehle von der zentralen Auswerte- und Steuereinheit drahtlos oder drahtgebunden zur Temperiereinrichtung übermittelt werden. Bei drahtloser Übermittlung ist insbesondere an die Übermittlung über handelsübliche und mittlerweile sehr preiswerte Funk-Sender-Empfänger-Einheiten zu denken, welche vorzugsweise mit der für allgemeine Anwendungen freigegebenen Frequenz von 433 MHz arbeiten. Bei der drahtgebundenen Übertragung bietet es sich an, auf ein in der Regel vorhandenes Stromnetz zurückzugreifen, wie es z. B. von den sogenannten "Baby-Phones" bekannt ist.

### (zu 14.)

Wird das Regelverfahren zur Regelung einer von einem Heiz- oder Kühlmittel durchströmten Temperiereinrichtung verwendet, wobei die Temperatur des Heiz- oder Kühlmittels einstellbar ist, so kann das Verfahren vorteilhaft so durchgeführt werden, β aus dem gemessenen Zeitabstand zwischen t-ein(n) und t-aus(n) (im folgenden Einschaltdauer (D(n)) genannt), sowie dem gemessenen Zeitabstand zwischen den lokalen Extremwerten Ist-Max(n-1) und Ist-Min(n), wenn die Temperiereinrichtung zum Heizen verwendet wird, bzw. dem gemessenen Zeitabstand zwischen den lokalen Extremwerten Ist-Min(n) und Ist-Max(n), wenn die Temperiereinrichtung zum Kühlen verwendet wird (im folgenden Halbzyklus (HZ(n)) genannt), die benötigte Differenz zwischen Heiz- oder Kühlmitteltemperatur und der Ist-Temperatur (im folgenden Vorlauftemperatur (VT) genannt) ermittelt und eingestellt wird, mit den folgenden Schritten:
a) Falls die Einschaltdauer (D(n)) kleiner ist als der Halbzyklus (HZ(n)) multipliziert mit einem Faktor (F), wird die Vorlauftemperatur (VT) um einen Bruchteil (B) erniedrigt und die Heiz- oder Kühlmitteltemperatur entsprechend verändert.
b) Falls die Einschaltdauer (D(n)) größer ist als der Halbzyklus (HZ(n)) multipliziert mit einem Faktor (F), wird die Vorlauftemperatur (VT) um einen Bruchteil (B) erhöht und die Heiz- oder Kühlmitteltemperatur entsprechend verändert.
c) Der nach den Ansprüchen 1 und 2 festgelegte Ausschaltzeitpunkt (t-aus(n+1)) wird so neu festgelegt, daß die Einschaltdauer (D(n+1)) im Falle a) um den Bruchteil (B) verlängert und im Falle b) um den Bruchteil (B) verkürzt wird.

Diese Durchführungsform des Verfahrens erlaubt eine energetisch besonders günstige Kühlung bzw. Heizung, da das Kühlmittel nicht unnötig weit unter die gewünschte mittlere Solltemperatur gekühlt bzw. das Heizmittel nicht unnötig weit über die gewünschte mittlere Solltemperatur erhitzt werden muß, denn es wird um so mehr Energie unnötig aufgewandt, um so mehr Kühl- oder Heizmitteltemperatur und gewünschte Solltemperatur voneinander differieren.

### (zu 15.)

Bei einer zweckmäßigen Alternative des Regelverfahrens wird eines Halbzyklus (HZ(n)) der Zeitabstand zwischen den lokalen Maxima (Ist-Max(n-1)) und (Ist-Max(n)) gemessen (im folgenden Ganzzyklus (GZ(n)) genannt) und in dem im vorstehenden Absatz beschriebenen Verfahren dieser Ganzzyklus (GZ(n)) anstelle des Halbzyklus (HZ(n)) berücksichtigt.

### (Zu 16.)

Eine weiter zweckmäßige Alternative besteht darin, daß aus der fortlaufend ermittelten 1. Ableitung des Temperaturverlaufs nach der Zeit im beheizten oder gekühlten Raum, Gegenstand, Gas oder der Flüssigkeit die benötigte Differenz zwischen Heiz- oder Kühlmitteltemperatur und der Ist-Temperatur (im folgenden Vorlauftemperatur (VT) genannt) ermittelt und eingestellt wird, mit den folgenden Schritten:
a) Bilden des arithmetischen Mittels aus den Beträgen der ermittelten 1. Ableitungen des Temperaturverlaufs nach der Zeit im Zeitraum zwischen den Temperaturextremwerten Ist-Max(n-1) und Ist-Min(n) (im folgenden Mittel(1) genannt) sowie im Zeitraum zwischen den Temperaturextremwerten Ist-Min(n) und Ist-Max(n) (im folgenden Mittel(2) genannt).
b) Falls Mittel(1) kleiner ist als Mittel(2) multipliziert mit einem Faktor (F), wird die Vorlauftemperatur (VT) um einen Bruchteil (B) erniedrigt und die Heiz- oder Kühlmitteltemperatur entsprechend verändert.
c) Falls Mittel(1) größer ist als Mittel(2) multipliziert mit einem Faktor (F), wird die Vorlauftemperatur (VT) um einen Bruchteil (B) erhöht und die Heiz- oder Kühlmitteltemperatur entsprechend verändert.
d) Der nach den Ansprüchen 1 und 2 festgelegte Ausschaltzeitpunkt (t-aus(n+1)) wird so neu festgelegt, daß die Einschaltdauer (D(n+1)) im Falle b) um den Bruchteil (B) verlängert und im Falle c) um den Bruchteil (B) verkürzt wird.

### (zu 17.)

Alternativ dazu kann auch statt des arithmetischen Mittels aus den 1. Ableitungen des Temperaturverlaufs nach der Zeit (Mittel (1)), ein fester Wert vorgegeben werden.

### (zu 18.)

Das Regelverfahren kann schließlich vorteilhaft auch dann angewandt werden, wenn nicht die Heiz- oder Kühlmitteltemperatur, stattdessen aber die Heiz- oder Kühlleistung geregelt werden kann. Dies wird vor allem dann der Fall sein, wenn die Temperiereinrichtung mit elektrischem Strom betrieben wird. Dbeschriebene Regelverfahren wird dazu mit der Modifikation angewandt, daß statt der Differenz zwischen Heiz- oder Kühlmitteltemperatur und der Ist-Temperatur (das ist die Vorlauftemperatur (VT)) jeweils die Heizleistung erhöht oder erniedrigt wird.

### (zu 19.)

Auch die Bestimmung der Heiz- oder Kühlmitteltemperatur oder der Heiz- oder Kühlleistung erfolgt vorteilhaft mittels einer zentralen Auswerte- und Steuereinheit, mittels welcher auch entsprechende Steuerbefehle zum Einstellen der Heiz- oder Kühlmitteltemperatur oder der Heiz- oder Kühlleistung erzeugt und drahtgebunden oder drahtlos zur Temperiereinrichtung übermittelt werden können.

Weitere Einzelheiten und Vorteile der Erfindung ergeben sich aus der nachfolgenden Beschreibung in Verbindung mit der Zeichnung. Es zeigen:
Fig. 1 die prinzipielle Anordnung einer zur Beheizung eines Raumes dienenden Temperiereinrichtung, die mittels eines erfindungsgemäßen Regelverfahrens geregelt
Fig. 2 den prinzipiellen Aufbau einer Regelvorrichtung mit einer zentralen Auswerte- und Steuereinheit,
Fig. 3 eine Prinzipskizze der Regelvorrichtung gemäß Fig. 2, wobei jedoch zur Übermittlung entsprechender Steuersignale zwischen Temperiereinrichtung und Auswerte- und Steuereinheit zwei Sender-Empfänger-Einheiten vorgesehen sind und
Fig. 4 ein Diagramm, in dem der Verlauf der Ist-Temperatur gegen die Zeit bei erfindungsgemäßer Regelung eines Heizsystems, sowie die Dauer, für die das Heizsystem eingeschaltet wird, eingetragen sind.

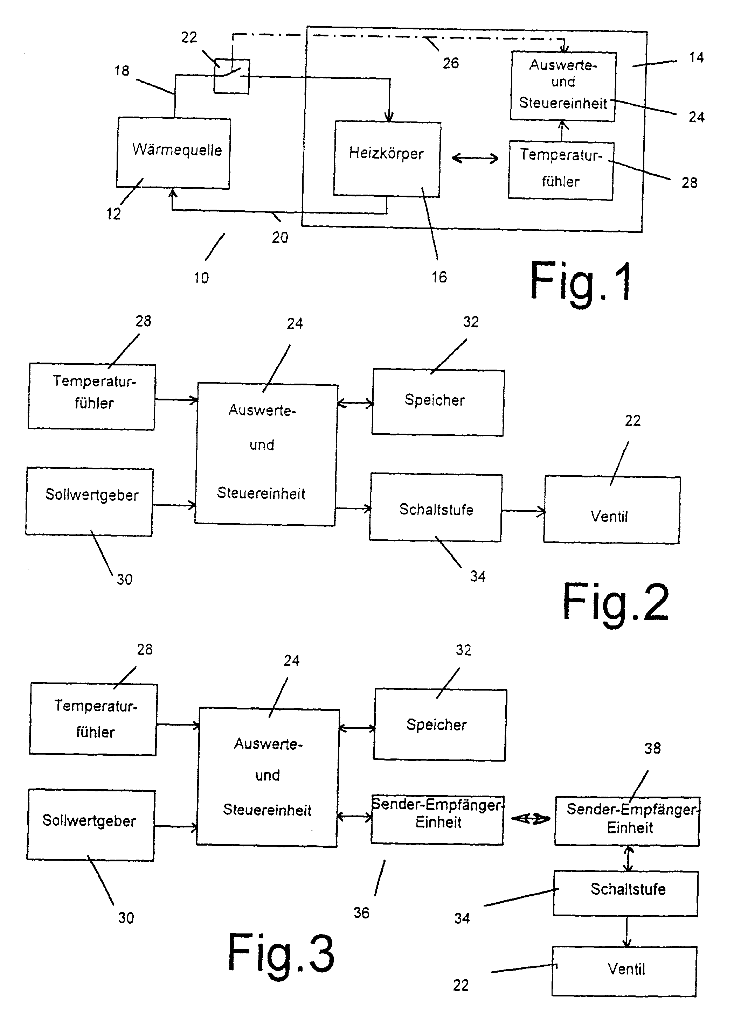

In der Fig. 1 ist eine in ihrer Gesamtheit mit 10 bezeichnete Temperiereinrichtung gezeigt, die im wesentlichen aus einer Wärmequelle 12, z. B. einem Ölbrenner, und einem in dem zu beheizenden Raum 14 angeordneten Heizkörper 16 besteht. Wärmequelle 12 und Heizkörper 16 sind über Leitungen 18 und 20 für das Heizmittel, z. B. Wasser, verbunden, wobei das Heizmittel über die Leitung 18 (den sogenannten Vorlauf) dem Heizkörper 16 zugeführt wird, aus dem es über den sogenannten Rücklauf 20 wieder abfließt und zur erneuten Erwärmung zur Wärmequelle 12 gelangt. Im Vorlauf 18 ist ein Ventil 22 angeordnet, das im gezeigten Ausführungsbeispiel nur zwei Schaltzustände besitzt, nämlich entweder ganz geöffnet oder ganz geschlossen. Das Ventil wird mittels einer zentralen Auswerte- und Steuereinheit 24 gesteuert, welche entsprechende Steuersignale erzeugt und -wie durch die gestrichelte Linie 26 angedeutet - an das Ventil 22 überträgt. Zur Erfassung der Ist-Temperatur ist im Raum 14 ist ein Temperaturfühler 28 angeordnet, der mit der zentralen Auswerte- und Steuereinheit 24 gekoppelt ist und letzt genannter die gemessenen Temperaturwerte fortlaufend übermittelt.

In der Praxis wird die zentrale Auswerte- und Steuereinheit 24 nicht nur mit einem Temperaturfühler 28, sondern - wie in Fig. 2 gezeigt - auch mit einem entsprechenden Sollwertgeber 30, z. B. einer Tastatur oder einem Drehknopf, gekoppelt, mittels welcher der Anwender des Verfahrens bzw. der Benutzer der Regelvorrichtung eine von ihm gewünschte Temperatur einstellen kann. Ferner wird zweckmäßigerweise ein Speicher 32 vorgesehen, auf den die zentrale Auswerte- und Steuereinheit sowohl zum Ablegen von Daten als auch zum Abrufen von Daten zugreifen kann. In einem solchen Speicher können z. B. zu verschiedenen, gerade nicht eingestellten Temperatursollwerten mögliche optimale Ein- und Ausschaltzeitpunkte abgelegt sein. Je nach Art und Ausgestaltung des Ventils 22 wird in der Praxis zwischen zentrale Auswerte- und Steuereinheit 24 und Ventil 22 noch eine Schaltstufe 34 geschaltet, welche die von der zentralen Auswerte- und Steuereinheit erzeugten Steuersignale in eine mechanische Bewegung des Ventils 22 umsetzt. Dabei ist es auch möglich - wie in Fig. 3 gezeigtzwischen der das Ventil bewegenden Schaltstufe 34 und der zentralen Auswerte- und Steuereinheit 24 zwei Sender-Empfänger-Einheiten 36 und 38 vorzusehen, mittels welcher die von der zentralen Auswerte- und Steuereinheit 24 erzeugten und von der Schaltstufe 34 umgesetzten Steuersignale drahtlos oder drahtgebunden übermittelt werden.

Bei der in Fig. 3 gezeigten Anordnung ist vorgesehen, daß das korrekte Empfangen der jeweiligen Steuersignale von der der Schaltstufe 34 zugeordneten Sender-Empfänger-Einheit 38 durch Erzeugen eines entsprechenden Bestätigungsignals bestätigt wird, welches wiederum von der Sender-Empfänger-Einheit 36 empfangen und von der zentralen Auswerte- und Steuereinheit 24 überprüft wird. Zeigt sich bei dieser Überprüfung, daß das Steuersignal nicht oder nur unvollständig empfangen wurde, wird eine entsprechende Fehlermeldung erzeugt und über an sich bekannte und deshalb hier nicht weiter gezeigte Anzeigemittel optisch und/oder akustisch ausgegeben. Alternativ oder zusätzlich ist es auch möglich, bei Auftreten einer Störung zunächst die Steuersignale erneut zu senden, da insbesondere dann, wenn die Übertragung drahtlos erfolgt, kurzzeitige Störungen in der Übertragungsstrecke auftreten können, die kein Eingreifen seitens des Anwenders des Verfahrens bzw. des Benutzers der Regelvorrichtung erfordern.

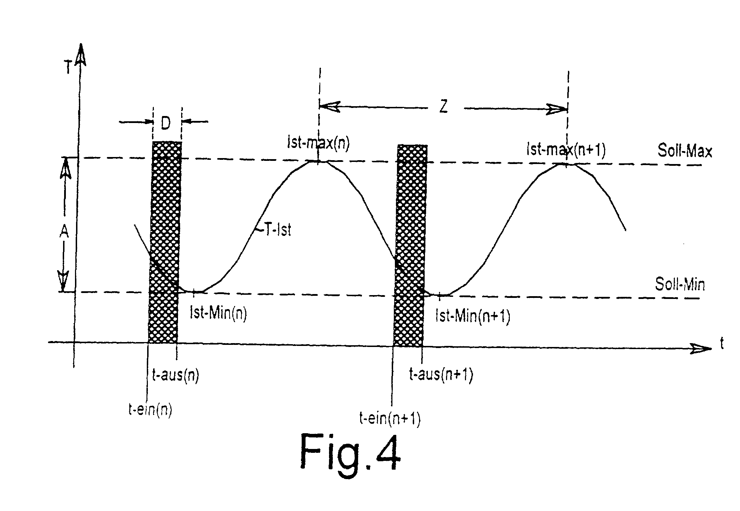

Das erfindungsgemäße selbstlernende Regelverfahren wird im folgenden mit Bezug auf das Diagramm gemäß Fig. 4 am Beispiel der Regelung einer Heizung mit einem Heizkörper detailliert beschrieben. Das Verfahren basiert auf der Grundüberlegung, daß Heizung und zu beheizender Raum ein System bilden, das sich zu Temperaturschwingungen anregen läßt. Aus der Art der Anregung und dem Temperaturverlauf, der sich Antwort auf eine bestimmte Anregung einstellt, lassen sich laufend Informationen über das System und seinen aktuellen Zustand gewinnen. Diese Informationen reichen aus, um kontrollierte Temperaturschwingungen kleiner Amplitude um einen Sollwert zu erzeugen, die diesem Sollwert beliebig nahe kommen. Erf indungsgemäß wird dazu der Heizkörper periodisch und phasenrichtig jeweils so lange eingeschaltet, daß eine Temperaturschwingung mit definierten Minima und Maxima entsteht. Minima und Maxima liegen dabei um sehr kleine Beträge unter bzw. über einem Sollwert, der dadurch sehr genau angenähert wird. Abweichungen zwischen den erwarteten und den tatsächlich auftretenden Schwingungen benutzt das selbstlernende Regelverfahren zur Korrektur der Anregung, d. h. des Einschaltzeitpunktes und des Ausschaltzeitpunktes bzw. der Einschaltdauer des Heizkörpers. Das Verfahren testet also laufend das Verhalten des Systems und ermittelt aus dessen Reaktion die optimalen Ein- und Ausschaltzeitpunkte für den Heizkörper.

Auf diese Weise wird eine sehr hohe Regelungsgenauigkeit erreicht, trotz der in Heizungssystemen üblicherweise anzutreffenden großen Trägheit. Das Verfahren benötigt keinerlei Voreinstellungen, da es alle Parameter aus dem System selbst extrahiert und laufend anpaßt. Es reagiert sehr schnell auf veränderte Umweltbedingungen, weil die Parameter auch im eingeschwungenen Zustand laufend überprüft werden. Sich abzeichnende Änderungen werden schon im Ansatz erkannt und ausgeregelt. Zur Messung des Temperaturverlaufs genügt ein einzelner Temperaturfühler. Von der Temperiereinrichtung, also im vorliegenden Beispiel der Heizung, wird nur verlangt, daß sich der Heizkreislauf über eine Umwälzpumpe oder ein Ventil ein-und ausschalten läßt. Proportionale Stellglieder sind nicht erforderlich. Weitere Daten der Temperiereinrichtung müssen nicht bekannt sein.

Zur Realisierung des erfindungsgemäßen Regelungsprinzips muß der Verlauf der Raumtemperatur in Beziehung zu Einschaltzeitpunkt und Einschaltdauer D des Heizkörpers gesetzt werden. Sind Einschaltzeitpunkt und Einschaltdauer bzw. Ausschaltzeitpunkt bekannt, lassen sich aus der Messung des tatsächlichen Temperaturverlaufs im beheizten Raum die Parameter für die Lösung der Beziehungsgleichungen bestimmen. Umgekehrt ermöglicht die Lösung der Gleichungen dann eine Prognose für den zukünftigen Temperaturverlauf. Aus dem Vergleich zwischen dem erwarteten und dem tatsächlich gemessenen Temperaturverlauf lassen sich sodann Änderungen der Umgebungsbedingungen ablesen und zur Korrektur der Parameter verwenden. Diese Schritte müssen in bestimmten Zeitabständen zyklisch (Heizzyklus der Dauer Z = Abstand zwischen Ist-Max(n+1) und Ist-Max(n)) wiederholt werden, um eine laufende Anpassung der Parameter zu ermöglichen.

Dabei gelten für kleine Temperaturschwankungen (Abstand A zwischen Soll-Max und Soll-Min < 1 °C) folgende Beziehungen: Die Lage von Ist-Min(n) hängt linear von t-ein(n) und der Steigung der Temperaturkurve des tatsächlichen Temperaturverlaufs T-Ist im Zeitpunkt t-ein(n) ab. Bei gegebener Steigung läßt sich also t-ein(n) so wählen, daß ein bestimmtes Ist-Min(n) genau erreicht wird. Die Lage von Ist-Max(n) hängt linear von t-ein(n), der Steigung der Temperaturkurve des Temperaturverlaufs T-Ist und der Einschaltdauer D, also der Differenz zwischen t-aus(n) und t-ein(n) ab. Bei gegebenem Einschaltzeitpunkt und gegebener Steigung läßt sich also t-aus(n) oder die Einschaltdauer D so wählen, daß ein bestimmtes Ist-Max genau erreicht wird.

Die Ist-Temperatur T-lst läßt sich nun wie folgt regeln: Als Sollwerte werden eine maximale Solltemperatur Soll-Max und eine minimale Solltemperatur Soll-Min vorgegeben. Jeweils zu Beginn eines Heizzyklus Z werden aus den Daten des vorangegangenen Zyklus die Gleichungs-Parameter bestimmt. t-ein(n) und t-aus(n) bzw. D werden nun so berechnet, daß Ist-Min(n) und Ist-Max(n) mit Soll-Min und Soll-Max zusammenfallen. Der Verlauf der Temperaturkurve der tatsächlichen Ist-Temperatur T-Ist wird sodann überwacht. Stimmt er nicht mit dem prognostizierten Verlauf überein, werden die Einschalt- und Ausschaltzeitpunkte entsprechend nachgeregelt. Die Parameter des aktuellen Zyklus sind gleich den Parametern des vorangegangenen Zyklus, wenn der Energiestrom in den Heizkörper, die Wärmeabgabe des Heizkörpers an den Raum und die Wärmeabgabe des Raumes an die Umgebung unverändert geblieben sind. Der Energiestrom in den Heizkörper wird im wesentlichen von der Vorlauftemperatur des Transportmediums bestimmt und ist entweder konstant oder ändert sich nur relativ langsam. Die Wärmeabgabe des Heizkörpers in den Raum kann bei kleinen Temperaturänderungen als konstant angenommen werden. Die Wärmeabgabe des Raumes an die Umgebung hängt im wesentlichen von der Umgebungstemperatur ab, die ebenfalls konstant ist, oder sich nur relativ langsam ändert. Änderungen der Vorlauftemperatur oder Umgebungstemperatur schlagen sich also in von Zyklus zu Zyklus leicht veränderten Parametern nieder. Dadurch werden Änderungen der Umgebungsbedingungen erfaßt und abgebildet.

Wesentlich ist, daß Soll-Min und Soll-Max einen Mindestabstand A aufweisen, der von der Empfindlichkeit des verwendeten Temperaturfühlers abhängt. Bei einer noch relativ leicht zu erzielenden Auflösung von 0,05 °C sind brauchbare Werte für A z. B. 0,3 oder 0,4 °C, womit sich eine prinzipielle Regelungsgenauigkeit von T-Ist +/- 0,15 °C bzw. +/- 0,2 °c ergibt. Mit empfindlicheren Temperaturfühlern läßt sich die Genauigkeit weiter steigern. Das erfindungsgemäße Regelverfahren erzwingt also kontrollierte Temperaturschwingungen um die mittlere Soll-Temperatur mit Maxima in Soll-Min und Soll-Max.

Soll nun eine niedrigere Soll-Temperatur angefahren werden, wird das Einschalten der Heizung entsprechend lange verzögert, bis das laufend vorausberechnete Ist-Min mit dem neuen Soll-Min zusammenfällt.

Soll eine höhere Soll-Temperatur angefahren werden, ergeben sich etwas andere Zusammenhänge. Für Temperaturerhöhungen >1 °C gilt nämlich folgendes: Solange sich der Heizkörper noch in der Aufheizphase befindet, erhöht sich seine Energieabgabe exponentiell und T-Ist steigt dementsprechend ebenfalls exponentiell. Hat der Heizkörper seine Endtemperatur erreicht, ist seine Energieabgabe konstant und T-Ist steigt linear. Ist der Heizkörper schließlich abgeschaltet, sinkt seine Wärmeabgabe exponentiell und T-Ist steigt folglich nunmehr gemäß einer negativen e-Funktion. Diese nicht linearen Zusammenhänge können für kleine Temperaturerhöhungen (< 1 °C) vernachlässigt werden, für größere aber nicht mehr. Die Temperaturerhöhung kann also nicht mehr als linear abhängig von der Steigung der Temperaturkurve T-Ist und der Einschaltdauer D betrachtet werden. Eine gute Näherung erhält man aber, wenn man die Abhängigkeit als parabelförmig annimmt. In die Beziehungsgleichung muß also ein zusätzliches quadratisches Glied eingeführt werden. Der entsprechende zusätzliche Parameter wird aus den ersten gemessenen größeren Temperatursprüngen bestimmt und dann laufend nachge führt.

Erst bei Temperaturerhöhungen um mehr als 6-8 °C werden mit dieser Näherung tendenziell zu kurze Einschaltzeiten berechnet, so daß die neue Soll-Temperatur nicht mit nur einem Heiz-zyklus erreicht wird. Dann ist ein zweiter Zyklus notwendig. Dadurch dauert die Aufheizphase zwar etwas länger, ein Überschwingen der Ist-Temperatur über Soll-Max hinaus wird aber sicher verhindert.

Mit dem erfindungsgemäßen Verfahren läßt sich vorteilhaft die minimal benötigte Vorlauftemperatur (Differenz zwischen Heiz- oder Kühlmitteltemperatur und Ist-Temperatur) aus folgenden Überlegungen ermitteln: Im eingeschwungenen Zustand erreicht die Wärmeabgabe des Heizkörpers während der Einschaltdauer D gerade aus, um die geforderten Temperaturschwingungen um den Sollwert zu erzwingen. Da die Wärmeabgabe proportional zur Vorlauftemperatur und der Zeit ist, wird dieselbe Wärme z. B. bei verdoppelter Einschaltdauer und halbierter Vorlauftemperatur abgegeben. Damit die Regelung nicht zu träge wird, sollte die Einschaltdauer D nicht länger sein als etwa das Doppelte des zeitlichen Abstands zwischen Ist-Max(n) und Ist-Min(n+1). Die aktuell auftretende Einschaltdauer D läßt sich daher je nachdem um einen Faktor verlängern oder verkürzen, wobei um denselben Faktor dann umgekehrt die Vorlauftemperatur erhöht oder erniedrigt werden muß.

Das beschriebene Regelungsverfahren führt bereits nach zwei bis drei Heizzyklen zu einer sehr genauen Einhaltung der Solltemperatur. Insbesondere bei häufig wechselnden Solltemperaturen oder stark schwankenden Umgebungsbedingungen läßt sich die Genauigkeit weiter steigern, wenn die einmal gefundenen Parameter in einer Tabelle gespeichert werden. Durch Vergleich der aktuell gefundenen mit den gespeicherten Parametern lassen sich die wahrscheinlich zutreffenden Parametern auch bei größeren Veränderungen vorhersagen und dementsprechend voreinstellen. Ist das Regelverfahren einige Zeit bei wechselnden Solltemperaturen und Umgebungsbedingungen betrieben worden, enthält die Tabelle dann so gut wie alle benötigten Betriebsparameter. Selbst nach einem längeren Stillstand ist die Regelung dann sofort optimal eingestellt.

Das am Beispiel einer Heizung beschriebene Regelverfahren läßt sich mit geringen Modifikationen auch zur Regelung von Kühl-oder Klimasystemen einsetzen, wobei zur Regelung eines Kühlsystems die Gleichungen lediglich dadurch angepaßt werden müssen, daß die Vorzeichen einiger Parameter vertauscht werden. Ansonsten gilt derselbe Verfahrensablauf.

Im Rahmen des Erfindungsgedankens sind zahlreiche Abwandlungen und Weiterbildungen möglich, die sich z. B. auf die Art der gemessenen bzw. ermittelten Parameter beziehen. So kann anstelle des genannten optimalen Ausschaltzeitpunkts der Temperiereinrichtung relativ zum Einschaltzeitpunkt auch eine optimale Ausschalttemperatur oder aber der - bezüglich des Zeitablaufs - absolute Ausschaltzeitpunkt ermittelt werden. Erfindungswesentlich ist jedenfalls, daß die Ist-Temperatur eines zu temperierenden Raumes, Gegenstands, Gas oder einer Flüssigkeit zu kontrollierten Schwingungen um eine mittlere Soll-Temperatur durch periodisches Ein- und Ausschalten der Temperiereinrichtung angeregt wird, wobei die sich als Reaktion auf das Ein- und Ausschalten der Temperiereinrichtung ergebende Ist-Temperatur in dem zu temperierenden Raum, Gegenstand, Gas oder der Flüssigkeit fortlaufend überwacht und zur Bestimmung der nächsten Ein- und Ausschaltzeitpunkte der Temperiereinrichtung verwendet wird.

## Patentansprüche

1. Selbstlernendes Regelverfahren zur Regelung einer Temperiereinrichtung (10) zum Zu- oder Abführen von Wärme zu oder aus einem Raum, Gegenstand, Gas oder einer Flüssigkeit, wobei ein maximaler Temperatursollwert (Soll-Max) und ein minimaler Temperatursollwert (Soll-Min) vorgegeben wird und der zeitliche Verlauf der Ist-Temperatur des Raums, Gegenstands, Gases oder der Flüssigkeit regelmäßig gemessen wird, mit den folgenden Schritten:
a) Festlegen eines n-ten Einschaltzeitpunktes (t-ein(n)), zu dem die Temperiereinrichtung (10) eingeschaltet wird,
b) Festlegen eines n-ten Ausschaltzeitpunktes (t-aus(n)), zu dem die Temperiereinrichtung (10) ausgeschaltet wird,
c) Erfassen der sich nach dem Einschalten der Temperiereinrichtung (10) ergebenden beiden n-ten Extremwerte (Ist-Max(n) und Ist-Min(n)) im Ist-Temperaturverlauf, in denen die Ist-Temperatur ein lokales Minimum und ein lokales Maximum hat,
d) Ermitteln der 1. Ableitung des Temperaturverlaufs nach der Zeit im n-ten Einschaltzeitpunkt (t-ein(n)),
e) Ermitteln derjenigen optimalen n-ten Ein- und Ausschaltzeitpunkte (t-optein(n) und t-optaus(n)) aus den Werten des n-ten Ausschaltzeitpunktes (t-aus(n)) und des n-ten Einschaltzeitpunktes (t-ein(n)), den beiden n-ten Extremwerten im Temperaturverlauf (Ist-Max(n), Ist-Min(n)) und der 1. Ableitung des Temperaturverlaufs nach der Zeit im n-ten Einschaltzeitpunkt (t-ein(n)), bei denen für den n-ten Extremwert (Ist-Max(n)) ein lokales Maximum im Temperaturverlauf gleich dem vorgegebenen maximalen Temperatursollwert (Soll-Max(n)) und für den n-ten Extremwert (Ist-Min(n)) ein lokales Minimum im Temperaturverlauf gleich dem vorgegebenen minimalen Temperatursollwert (Soll-Min(n)) erreicht wird.
f) Inkrementieren von n um 1 und Wiederholen der Schritte a) bis f), wobei die ermittelten n-ten Ein- und Ausschaltzeitpunkte (t-optein(n) und t-optaus(n)) sowie die 1. Ableitung des Temperaturverlaufs nach der Zeit im n-ten Einschaltzeitpunkt (t-ein(n)) bei der Festlegung der n+1 Einschalt- und Ausschaltzeitpunkte (t-ein(n+1) und t-aus(n+1)) berücksichtigt werden.

2. Regelverfahren nach Anspruch 1, **dadurch gekennzeichnet, daß** bei unveränderten Temperatursollwerten (Soll-Max und Soll-Min) der n+1te Einschaltzeitpunkt (t-ein(n+1)) gleich dem optimalen n-ten Einschaltzeitpunkt (t-optein(n)) und/oder der n+1te Ausschaltzeitpunkt (t-aus(n+1)) gleich dem optimalen n-ten Ausschaltzeitpunkt (t-optaus(n)) gesetzt wird.

3. Regelverfahren nach Anspruch 1 und 2, **dadurch gekennzeichnet, daß** zusätzlich der zeitliche Abstand ermittelt wird zwischen dem Einschaltzeitpunkt (t-ein(n)) und dem lokalen Minimum (Ist-Min(n)), wenn die Temperiereinrichtung (10) zum Heizen verwendet wird, bzw. zwischen dem Einschaltzeitpunkt (t-ein(n)) und dem lokalen Maximum (Ist-Max(n)), wenn die Temperiereinrichtung (10) zum Kühlen verwendet wird, und dieser zeitliche Abstand beim Festlegen des n+1ten Ausschaltzeitpunktes (t-aus(n+1)) berücksichtigt wird.

4. Regelverfahren nach einem der Ansprüche 1 bis 3, **dadurch gekennzeichnet, daß** nach dem Einschalten der Temperiereinrichtung (10) im Einschaltzeitpunkt (t-ein(n)) die 1. Ableitung des Temperaturverlaufs nach der Zeit fortlaufend ermittelt wird und die Temperiereinrichtung nur dann ausgeschaltet wird, wenn
- der festgelegte Ausschaltzeitpunkt (t-aus(n)) verstrichen ist und
- im Falle des Heizens ein lokales Minimum im Temperaturverlauf (Ist-Min(n)), bzw. im Falle des Kühlens ein lokales Maximum im Temperaturverlauf (Ist-Max(n)) aufgetreten ist und
- die 1. Ableitung des Temperaturverlaufs nach der Zeit im Falle des Heizens größer bzw. im Falle des Kühlens kleiner als ein festgelegter Wert ist und
- die aktuelle Ist-Temperatur im Falle des Heizens größer als der minimale Temperatursollwert (Soll-Min), bzw. im Falle des Kühlens kleiner als der maximale Temperatursollwert (Soll-Max) ist.

5. Regelverfahren nach Anspruch 4, **dadurch gekennzeichnet, daß** kein Ausschaltzeitpunkt (t-aus(n)) festgelegt wird, sondern daß nach dem Einschalten der Temperiereinrichtung (10) im Einschaltzeitpunkt (t-ein(n)) die 1. Ableitung des Temperaturverlaufs nach der Zeit fortlaufend ermittelt wird und die Temperiereinrichtung nur dann ausgeschaltet wird, wenn
- im Falle des Heizens ein lokales Minimum im Temperaturverlauf (Ist-Min(n)), bzw. im Falle des Kühlens ein lokales Maximum im Temperaturverlauf (IstMax(n)) aufgetreten ist und
- die 1. Ableitung des Temperaturverlaufs nach der Zeit im Falle des Heizens größer bzw. im Falle des Kühlens kleiner als ein festgelegter Wert ist und
- die aktuelle Ist-Temperatur im Falle des Heizens größer als der minimale Temperatursollwert (Soll-Min), bzw. im Falle des Kühlens kleiner als der maximale Temperatursollwert (Soll-Max) ist.

6. Regelverfahren nach einem der Ansprüche 1 bis 5, **dadurch gekennzeichnet, daß** zur Bestimmung des n+1ten Einschaltzeitpunktes (t-ein(n+1)) wenigstens die drei Werte des nten, des n-1ten und des n-2ten optimalen Einschaltzeitpunktes (t-optein(n), t-optein(n-1) und t-optein(n-2)) der Größe nach angeordnet werden und der mittlere Wert als Wert für den n+1 Einschaltzeitpunkt (t-ein(n+1)) ausgewählt wird.

7. Regelverfahren nach einem der Ansprüche 1 bis 4 oder 6, **dadurch gekennzeichnet, daß** zur Bestimmung des n+1ten Ausschaltzeitpunktes (t-aus(n+1)) wenigstens die drei Werte des n-ten, des n-1ten und des n-2ten optimalen Ausschaltzeitpunktes (t-optaus(n), t-optaus(n-1) und t-optaus(n-2)) der Größe nach angeordnet und der mittlere Wert als Wert für den n+1ten Ausschaltzeitpunkt (t-aus(n+1)) ausgewählt wird.

8. Regelverfahren nach einem der Ansprüche 1 bis 7, **dadurch gekennzeichnet, daß** ein Grenzwert für die 1. Ableitung des Temperaturverlaufs nach der Zeit im n-ten Einschaltzeitpunkt (t-ein(n)) vorgegeben wird, bei dessen Über- oder Unterschreiten die danach gemessenen Werte für die Bestimmung der optimalen Ein- und Ausschaltzeitpunkte (t-optein(n) und t-optaus(n)) bis zum Eintritt einer vorgebbaren Bedingung nicht mehr berücksichtigt werden.

9. Regelverfahren nach einem der Ansprüche 1 bis 8, **dadurch gekennzeichnet, daß** vom Anwender des Verfahrens nur ein Temperatursollwert vorgegeben werden muß, aus dem die Werte des maximalen und minimalen Temperatursollwerts (Soll-Max und Soll-Min) bestimmt werden.

10. Regelverfahren nach einem der Ansprüche 1 bis 9, **dadurch gekennzeichnet, daß** die Temperatursollwerte (Soll-Max und Soll-Min) sowie die zu diesen Sollwerten (Soll-Max und Soll-Min) jeweils zuletzt bestimmten n-ten Ein- und Ausschaltzeitpunkte (t-ein(n) und t-aus(n)) in einer Speichereinheit gespeichert werden und daß bei einer Änderung der Temperatursollwerte (Soll-Max und Soll-Min) die Speichereinheit daraufhin überprüft wird ob zu den geänderten Temperatursollwerten (Soll-Max und Soll-Min) bereits n-te Ein- und Ausschaltzeitpunkte (t-ein(n) und t-aus (n)) gespeichert sind, welche dann für das erste Durchlaufen des Regelverfahrens mit den neuen Sollwerten als Ein- und Ausschaltzeitpunkte übernommen werden.

11. Regelverfahren nach einem der Ansprüche 1 bis 10, **dadurch gekennzeichnet, daß** die Bestimmung von n-ten Ein- und Ausschaltzeitpunkten (t-ein(n) und t-aus(n)) mittels einer zentralen Auswerte- und Steuereinheit (24) erfolgt, mittels welcher auch entsprechende Steuerbefehle zum Ein- und Ausschalten der Temperiereinrichtung (10) erzeugt werden.

12. Regelverfahren nach Anspruch 11, **dadurch gekennzeichnet, daß** die Steuerbefehle von der zentralen Auswerte- und Steuereinheit (24) drahtlos zur Temperiereinrichtung (10) übermittelt werden.

13. Regelverfahren nach Anspruch 11, **dadurch gekennzeichnet, daß** die Steuerbefehle von der zentralen Auswerte- und Steuereinheit (24) drahtgebunden zur Temperiereinrichtung (10) übermittelt werden.

14. Regelverfahren nach einem der Ansprüche 1 bis 13 für von einem Heiz- oder Kühlmittel durchströmte Temperiereinrichtungen (10), wobei die Temperatur des Heiz- oder Kühlmittels einstellbar ist, **dadurch gekennzeichnet, daß** aus dem gemessenen Zeitabstand zwischen t-ein(n) und t-aus(n) (im folgenden Einschaltdauer (D(n)) genannt), sowie dem gemessenen Zeitabstand zwischen den lokalen Extremwerten Ist-Max(n-1) und Ist-Min(n), wenn die Temperiereinrichtung zum Heizen verwendet wird, bzw. dem gemessenen Zeitabstand zwischen den lokalen Extremwerten Ist-Min(n) und Ist-Max(n), wenn die Temperiereinrichtung zum Kühlen verwendet wird (im folgenden Halbzyklus (HZ(n)) genannt), die benötigte Differenz zwischen Heiz- oder Kühlmitteltemperatur und der Ist-Temperatur (im folgenden Vorlauftemperatur (VT) genannt) ermittelt und eingestellt wird, mit den folgenden Schritten:
a) Falls die Einschaltdauer (D(n)) kleiner ist als der Halbzyklus (HZ(n)) multipliziert mit einem Faktor (F), wird die Vorlauftemperatur (VT) um einen Bruchteil (B) erniedrigt und die Heiz- oder Kühlmitteltemperatur entsprechend verändert.
b) Falls die Einschaltdauer (D(n)) größer ist als der Halbzyklus (HZ(n)) multipliziert mit einem Faktor (F), wird die Vorlauftemperatur (VT) um einen Bruchteil (B) erhöht und die Heiz- oder Kühlmitteltemperatur entsprechend verändert.
c) Der nach den Ansprüchen 1 und 2 festgelegte Ausschaltzeitpunkt (t-aus(n+1)) wird so neu festgelegt, daß die Einschaltdauer (D(n+1)) im Falle a) um den Bruchteil (B) verlängert und im Falle b) um den Bruchteil (B) verkürzt wird.

15. Regelverfahren nach Anspruch 14, **dadurch gekennzeichnet, daß** statt eines Halbzyklus (HZ(n)) der Zeitabstand zwischen den lokalen Maxima (Ist-Max(n-1)) und (Ist-Max(n)) gemessen wird (im folgenden Ganzzyklus (GZ(n)) genannt) und in dem in Anspruch 14 beschriebenen Verfahren dieser Ganzzyklus (GZ(n)) anstelle des Halbzyklus (HZ(n)) berücksichtigt wird.

16. Regelverfahren nach einem der Ansprüche 1 bis 13 für von einem Heiz- oder Kühlmittel durchströmte Temperiereinrichtungen (10), wobei die Temperatur des Heiz- oder Kühlmittels einstellbar ist, **dadurch gekennzeichnet, daß** aus der fortlaufend ermittelten 1. Ableitung des Temperaturverlaufs nach der Zeit im beheizten oder gekühlten Raum, Gegenstand, Gas oder der Flüssigkeit die benötigte Differenz zwischen Heiz- oder Kühlmitteltemperatur und der Ist-Temperatur (im folgenden Vorlauftemperatur (VT) genannt) ermittelt und eingestellt wird, mit den folgenden Schritten:
a) Bilden des arithmetischen Mittels aus den Beträgen der ermittelten 1. Ableitungen des Temperaturverlaufs nach der Zeit im Zeitraum zwischen den Temperaturextremwerten Ist-Max(n-1) und Ist-Min(n) (im folgenden Mittel(1) genannt) sowie im Zeitraum zwischen den Temperaturextremwerten Ist-Min(n) und Ist-Max(n) (im folgenden Mittel(2) genannt).
b) Falls Mittel(1) kleiner ist als Mittel(2) multipliziert mit einem Faktor (F), wird die Vorlauftemperatur (VT) um einen Bruchteil (B) erniedrigt und die Heiz- oder Kühlmitteltemperatur entsprechend verändert.
c) Falls Mittel(1) größer ist als Mittel(2) multipliziert mit einem Faktor (F), wird die Vorlauftemperatur (VT) um einen Bruchteil (B) erhöht und die Heiz- oder Kühlmitteltemperatur entsprechend verändert.
d) Der nach den Ansprüchen 1 und 2 festgelegte Ausschaltzeitpunkt (t-aus(n+1)) wird so neu festgelegt, daß die Einschaltdauer (D(n+1)) im Falle b) um den Bruchteil (B) verlängert und im Falle c) um den Bruchteil (B) verkürzt wird.

17. Regelverfahren nach Anspruch 16, **dadurch gekennzeichnet, daß** statt Mittel(1) ein fester Wert vorgegeben wird.

18. Regelverfahren nach einem der Ansprüche 14 bis 17 für von einem Heiz- oder Kühlmittel durchströmte oder mit elektrischem Strom betriebene Temperiereinrichtungen (10), wobei die Heiz- oder Kühlleistung des Heiz- oder Kühlmittels oder des elektrischen Stroms einstellbar ist, **dadurch gekennzeichnet, daß** das in einem der Ansprüche 14 bis 17 beschriebene Verfahren mit der Modifikation angewandt wird, daß statt der Vorlauftemperatur (VT) jeweils die Heiz- oder Kühlleistung erhöht oder erniedrigt wird.

19. Regelverfahren nach einem der Ansprüche 1 bis 18, **dadurch gekennzeichnet, daß** die Bestimmung der Vorlauftemperatur (VT) und der Heiz- oder Kühlmitteltemperatur oder der Heiz- oder Kühlleistung mittels einer zentralen Auswerte- und Steuereinheit (24) erfolgt, mittels welcher auch entsprechende Steuerbefehle zum Einstellen der Heiz- oder Kühlmitteltemperatur oder der Heiz-oder Kühlleistung erzeugt und drahtgebunden oder drahtlos zur Temperiereinrichtung (10) übermittelt werden.

## Claims

1. A smart control strategy for regulating a temperature controller (10) for supplying or exhausting heat to/from a space, object or fluid in which a maximum temperature setpoint (setpoint-MAX) and a minimum temperature setpoint (setpoint-MIN) is specified and the time profile of the actual temperature of the space, object or fluid is regularly measured, comprising the following steps:
a) defining an nth ON point in time (t-ON(n)) at which the temperature controller (10) is to be signalled ON,
b) defining an nth OFF point in time (t-OFF(n)) at which the temperature controller (10) is to be signalled OFF,
c) sensing the two nth extreme values (actual-MAX(n) and actual-MIN(n)) resulting after ON of the temperature controller (10) in the actual temperature profile in which the actual temperature has a local minimum and a local maximum,
d) determining the 1st derivation of the temperature profile with time in the nth ON point in time (t-ON(n)),
e) determining the optimum nth ON/OFF points in time (t-optON(n) and t-optOFF(n)) from the values of the nth OFF point in time (t-OFF(n)) and the nth ON point in time (t-ON(n)), the two nth extreme values in the temperature profile (actual-MAX(n), actual-MIN(n)) and the 1st derivation of the temperature profile with time in the nth ON point in time (t-ON(n)) at which for the nth extreme value (actual-MAX(n)) a local maximum in the temperature profile equalling the specified maximum temperature setpoint (setpoint MAX(n)) and for the nth extreme value (actual-MIN(n)) a local minimum in the temperature profile equalling the specified minimum temperature setpoint (setpoint MIN(n)) is attained,
f) incrementing n by 1 and repeating the steps a) to f) taking into account the determined nth ON/OFF points in time (t-optON(n) and t-optOFF(n)) as well as the 1st derivation of the temperature profile with time in the nth ON point in time (t-ON(n)) in establishing the n+1 ON/OFF points in time (t-ON(n+1) and t-OFF(n+1)).

2. The control strategy as set forth in claim 1, **characterized in that** with no change in the temperature setpoints (setpoint-MAX/MIN) the n+1th ON point in time (t-ON(n+1)) is set equal to the optimum nth ON point in time (t-optON(n)) and/or the n+1th OFF point in time (t-OFF(n+1)) is set equal to the optimum nth OFF point in time (t-optOFF(n)).

3. The control strategy as set forth in claim 1 and 2, **characterized by** in addition establishing the time interval between the ON point in time (t-ON(n)) and the local minimum (actual-MIN(n)) when the temperature controller (10) is used for heating or, respectively, between the ON point in time (t-ON(n)) and the local maximum (actual-MAX(n)) when the temperature controller (10) is used for cooling, and taking into account this time interval when defining the n+1th OFF point in time (t-OFF(n+1)).

4. The control strategy as set forth in any of the claims 1 to 3, **characterized in that** after ON of the temperature controller (10) at the ON point in time (t-ON(n)) the 1st derivation of the temperature profile is continually sensed with time and the temperature controller is signalled OFF only when
- timeout of the defined OFF point in time (t-OFF(n)) is attained and
- a local minimum (actual-MIN(n)) or local maximum (actual-MAX(n)) has occurred in the heating temperature profile and cooling temperature profile respectively, and
- the Ist derivation of the temperature profile with time is greater or smaller than a specified value in heating and cooling respectively, and
- the current actual temperature is greater than the minimum temperature setpoint (setpoint-MIN) or smaller than the maximum temperature setpoint (setpoint-MAX) in heating and cooling respectively.

5. The control strategy as set forth in claim 4, **characterized in that** no OFF point in time (t-OFF(n)) is defined, and that instead, after ON of the temperature controller (10) at the ON point in time (t-ON(n)) the 1st derivation of the temperature profile is continually sensed with time and the temperature controller is signalled OFF only when
- a local minimum (actual-MIN(n)) or local maximum (actual-MAX(n)) has occurred in the heating temperature profile and cooling temperature profile respectively, and
- the 1st derivation of the temperature profile with time is greater or smaller than a specified value in heating and cooling respectively, and
- the current actual temperature is greater than the minimum temperature setpoint (setpoint-MIN) or smaller than the maximum temperature setpoint (setpoint-MAX) in heating and cooling respectively.

6. The control strategy as set forth in any of the claims 1 to 5, **characterized in that** for defining the n+1th ON point in time (t-ON(n+1)) at least the three values of the nth, n-1th and n-2th optimum ON point in time (t-optON(n), t-optON(n-1) and t-optON(n-2)) are arranged according to size and the mean value is selected as the value for the n+1 ON point in time (t-ON(n+1)).

7. The control strategy as set forth in any of the claims 1 to 4 or 6, **characterized in that** for defining the n+1th OFF point in time (t-OFF(n+1)) at least the three values of the nth, n-1th and n-2th optimum OFF point in time (t-optOFF(n), t-optOFF(n-1) and t-optOFF(n-2)) are arranged according to size and the mean value is selected as the value for the n+1th OFF point in time (t-OFF(n+1)).

8. The control strategy as set forth in any of the claims 1 to 7, **characterized in that** a limit value is specified for the 1st derivation of the temperature profile with time at the nth ON point in time (t-ON(n)) which when violated results in the values measured thereafter no longer being taken into account for defining the optimum ON/OFF points in time (t-optON(n) and t-optOFF(n)) until the occurrence of a specifiable condition.

9. The control strategy as set forth in any of the claims 1 to 8, **characterized in that** the user of the strategy merely needs to specify one temperature setpoint from which the values of the maximum and minimum temperature setpoints (setpoint-MAX and setpoint-MIN) are defined.

10. The control strategy as set forth in any of the claims 1 to 9, **characterized in that** the temperature setpoints (setpoint-MAX and setpoint-KN) as well as the nth ON/OFF points in time (t-ON(n) and t-OFF(n)) defined lastly relative to said setpoints (setpoint-MAX and setpoint-MIN) are memorized in a memory unit and that when there is a change in the temperature setpoints (setpoint-MAX and setpoint-MIN) the memory unit is checked to see whether nth ON/OFF points in time (t-ON(n) and t-OFF(n)) are already memorized for the changed temperature setpoints (setpoint-MAX and setpoint-MIN) which are then taken over as the ON/OFF points in time for the first cycle of the control strategy with the new setpoints.

11. The control strategy as set forth in any of the claims 1 to 10, **characterized in that** nth ON/OFF points in time (t-ON(n) and (t-OFF(n)) are defined by means of a central analyzer/control unit (24) with which corresponding control commands for signalling the temperature controller (10) ON/OFF are also generated.

12. The control strategy as set forth in claim 11, **characterized in that** said control commands are transmitted from said central analyzer/control unit (24) to said temperature controller (10) wireless.

13. The control strategy as set forth in claim 11, **characterized in that** said control commands are transmitted from said central analyzer/control unit (24) to said temperature controller (10) wired.

14. The control strategy as set forth in any of the claims 1 to 13 for regulating temperature controllers (10) through which a heating agent/coolant flows, the temperature of the heating agent/coolant being adjustable, **characterized in that** the difference required between the heating agent/coolant temperature and the actual temperature (termed supply flow temperature (VT) in the following) is defined and set from the time interval as measured between t-ON(n) and t-OFF(n) (termed ON duration (D(n)) in the following), as well as from the time interval as measured between the local extreme values actual-MAX(n-1) and actual-MIN(n)-when the temperature controller is used for heating - or, respectively as well as from the time interval as measured between the local extreme values actual-MIN(n) and actual-MAX(n) - when the temperature controller is used for cooling (termed half cycle (HC(n)) in the following), comprising the following steps:
a) lowering the supply flow temperature (VT) by a fraction (B) and modifying the heating agent/coolant temperature accordingly if the ON duration (D(n)) is smaller than the half cycle (HC(n)) multiplied by a factor (F),
b) elevating the supply flow temperature (VT) by a fraction (B) and modifying the heating agent/coolant temperature accordingly if the ON duration (D(n)) is greater than the half cycle (HC(n)) multiplied by a factor (F),
c) redefining the OFF point in time (t-OFF(n+1)) as it reads from claims 1 and 2 such that the ON duration (D(n+1)) in case a) is lengthened by the fraction (B) and in case b) is shortened by the fraction (B).

15. The control strategy as set forth in claim 14, **characterized in that** instead of a half cycle (HC(n)) the time interval between the local maxima (actual-MAX(n-1) and (actual-MAX(n)) is measured (termed full cycle (FC(n)) in the following), said full cycle (FC(n)) being taken into account instead of said half cycle (HC(n)) in the strategy as it reads from claim 14.

16. The control strategy as set forth in any of the claims 1 to 13 for regulating temperature controllers (10) through which a heating agent/coolant flows, the temperature of the heating agent/coolant being adjustable, **characterized in that** the difference required between the heating agent/coolant temperature and the actual temperature (termed supply flow temperature (VT) in the following) is defined and set from the continually defined 1st derivation of the temperature profile with time in the heated or cooled space, object or fluid, comprising the following steps:
a) forming the arithmetic mean from the amounts of the defined 1st derivations of the temperature profile with time in the time interval between the temperature extreme values actual-MAX(n-1) and actual-MIN(n) (termed median(1) in the following) as well as in the time interval between the temperature extreme values actual-MIN(n) and actual-MAX(n) (termed median(2) in the following),
b) lowering the supply flow temperature (VT) by a fraction (B) and modifying the heating agent/coolant temperature accordingly if median(1) is smaller than median(2) multiplied by a factor (F),
c) elevating the supply flow temperature (VT) by a fraction (B) and modifying the heating agent/coolant temperature accordingly if median(1) is greater than median(2) multiplied by a factor (F),
d) redefining the OFF point in time (t-OFF(n+1)) as it reads from claims 1 and 2 such that the ON duration (D(n+1)) in case b) is lengthened by the fraction (B) and in case c) is shortened by the fraction (B).

17. The control strategy as set forth in claim 16, **characterized in that** a fixed value is specified instead of said median(1).

18. The control strategy as set forth in any of the claims 14 to 17 for temperature controllers (10) passing a flow of heating agent or coolant or being electrically powered, the heating/cooling power of the heating agent or coolant or of the electrical power being adjustable, **characterized in that** the strategy as set forth in any of the claims 14 to 17 is put to use with the modification that instead of the supply flow temperature (VT)) it is the heating/cooling power in each case that is elevated or lowered.

19. The control strategy as set forth in any of the claims 1 to 18, **characterized in that** defining the supply flow temperature (VT) and the heating agent/coolant temperature or the heating/cooling power is done by means of a central analyzer/control unit (24) by means of which also corresponding control commands for setting the heating agent/coolant temperature or the heating/cooling power are generated and transmitted to the temperature controller (10) wireless or wired.

## Revendications

1. Procédé de réglage auto-adaptatif pour le réglage d'un système de régulation de température (10) pour l'arrivée ou l'évacuation de chaleur vers un local, un objet, un gaz ou un liquide ou à partir de celui-ci, une valeur théorique de température maximale (max.théorique) et une valeur théorique minimale de température (min.théorique) étant prédéfinies et la variation dans le temps de la température réelle du local, de l'objet, du gaz ou du liquide étant régulièrement mesurée, comprenant les étapes suivantes :
a) Fixation d'un n-ième instant de mise en route (t-marche(n)), auquel le système de régulation de température (10) est mis en route.
b) Fixation d'un n-ième instant de déconnexion (t-arrêt(n)), auquel le système de régulation de température (10) est déconnecté.
c) Enregistrement des deux n-ièmes valeurs extrêmes (max.réel(n) et min.réel(n)) de la courbe de température réelle obtenues après la mise en route du système de régulation de température (10), pour lesquelles la température réelle a un minimum local et un maximum local.
d) Calcul de la première dérivée de la courbe de température en fonction du temps au n-ième instant de mise en route (t-marche(n)),
e) Calcul des n-ièmes instants optimum de mise en route et de déconnexion (t-opt.marche(n)et t-opt.arrêt(n)) à partir des valeurs du n-ième instant de déconnexion (t-arrêt(n)) et du n-ième instant de mise en route (t-marche(n)), des deux n-ièmes valeurs extrêmes dans la courbe de température (max.réel(n), min.réel(n)) et de la première dérivée de la courbe de température en fonction du temps au n-ième instant de mise en route (t-marche(n)), pour lesquelles on atteint pour la n-ième valeur extrême (max.réel(n)) un maximum local sur la courbe de température égal à la valeur théorique de température maximale prédéfinie (max.théorique(n)) et pour la n-ième valeur extrême (min.réel(n)) un minimum local sur la courbe de température égal à la valeur théorique de température minimum définie (min.théorique(n)).
f) Incrémentation de n de 1 et répétition des étapes a) à f), les n-ièmes instants de mise en route et de déconnexion calculés (t-opt.marche(n) et t-opt.arrêt(n)) et la première dérivée de la courbe de température en fonction du temps au n-ième instant de mise en route (t-marche(n)) étant pris en compte lors de la détermination des n+1 instants de mise en route et de déconnexion (t-marche(n+1) et t-arret(n+1)).

2. Procédé de réglage selon la revendication 1,
**caractérisé en ce que**, pour des valeurs théoriques de température non modifiées (max.théorique et min.théorique), le n+1-ième instant de mise en route (t-marche(n+1)) est égal au n-ième instant optimal de mise en route (t-opt.marche) et/ou le n-ième instant de déconnexion (t-arrêt(n+1)) est égal au n-ième instant optimal de déconnexion (t-opt.arrêt).

3. Procédé de réglage selon les revendications 1 et 2, **caractérisé en ce que**, en supplément, est calculé l'intervalle de temps entre l'instant de mise en route (t-marche(n)) et le minimum local (min.réel(n)), lorsque le système de régulation de température (10) est utilisé pour le chauffage et entre l'instant de mise en route (t-marche(n)) et le maximal local (max.réel(n)) si le système de régulation de température (10) est utilisé pour le refroidissement, et cet espace de temps étant pris en compte pour la fixation du n+1-ième temps de déconnexion (t-arrêt(n+1)).

4. Procédé de réglage selon l'une quelconque des revendications 1 à 3, **caractérisé en ce que**, après. la mise en route du système de régulation de température (10) à l'instant de mise en route (t-marche(n)), la première dérivée de la courbe de température en fonction du temps est calculée en permanence et le système de régulation de température n'est déconnecté que lorsque
- le moment de déconnexion (t-arrêt(n)) défini est passé et
- un minimum local est apparu sur la courbe de température (min.réel(n)) en cas de chauffage ou un maximum local est apparu sur la courbe de température (max.réel(n)) en cas de refroidissement et
- la première dérivée de la courbe de température réelle en fonction du temps est supérieure en cas de chauffage ou inférieure en cas de refroidissement à une valeur définie et
- la température réelle instantanée est supérieure en cas de chauffage à la valeur de température minimale (min.théorique) et inférieure en cas de refroidissement à la valeur de température maximale (max.théorique).

5. Procédé de réglage selon la revendication 4,
**caractérisé en ce qu'**on ne définit pas un instant de déconnexion (t-arrét (n)), mais que, après la mise en route du système de régulation de température (10) à l'instant de mise en route (t-marche(n)), la première dérivée de la courbe de température en fonction du temps est calculée en permanence et le système de régulation de température n'est déconnecté que dans les cas suivants :
- un minimum local est apparu sur la courbe de température (min.réel(n)) en cas de chauffage et un maximum local est apparu sur la courbe de température (max.réel(n)) en cas de refroidissement et
- la première dérivée de la courbe de température en fonction du temps est supérieure en cas de chauffage et inférieure en cas de refroidissement à une valeur définie et
- la température réelle instantanée est supérieure en cas de chauffage à la valeur théorique de température minimale (min.théorique) et inférieure en cas de refroidissement à la valeur de température maximale (max.théorique).

6. Procédé de réglage selon l'une quelconque des revendications 1 à 5, **caractérisé en ce que**, pour déterminer le n+1-ième instant de mise en route (t-marche(n+1)), au moins les trois valeurs du n-ième, n-1-ième et du n-2-ième instants optimum de mise en route (t-opt.marche (n), t-opt.marche(n-1) et t-opt.marche(n-2) sont classées selon la grandeur et la valeur moyenne est choisie comme valeur pour déterminer le n+lième temps de mise en route (t-marche(n+1)).

7. Procédé de réglage selon l'une quelconque des revendications 1 à 4 ou 6, **caractérisé en ce que**, pour déterminer le n+1-ième instant de déconnexion (t-arrêt (n+1)), au moins les trois valeurs du n-ième, n-1-ième et du n-2-ième instants optimum de déconnexion (t-opt.arrêt, t-opt.arrêt(n-1) et t-opt.arrêt(n-2)) sont classées selon la grandeur et la valeur moyenne est choisie comme valeur pour le déterminer n+1-ième instant de déconnexion (t-arrêt(n+1)).

8. Procédé de réglage selon l'une quelconque des revendications 1 à 7, **caractérisé en ce qu'**une valeur limite est prédéfinie pour la première dérivée de la courbe de température en fonction du temps au n-ième instant de mise en route (t-marche(n)), au delà ou deçà de laquelle les valeurs mesurées ensuite ne sont plus prises en compte jusqu'à la survenance d'une condition pré-définissable, pour le calcul des instants optimum de mise en route et de déconnexion (t-opt.marche(n) et t-opt.arrêt(n)).

9. Procédé de réglage selon l'une quelconque des revendications 1 à 8, **caractérisé en ce que** l'utilisateur du procédé doit prédéfinir seulement une valeur théorique de température à partir de laquelle les valeurs de température théoriques maximale et minimale (max.théorique et min.théorique) sont calculées.

10. Procédé de réglage selon l'une quelconque des revendications 1 à 9, **caractérisé en ce que** les valeurs de température théoriques (max.théorique et min.théorique) ainsi que les n-ièmes instants de mise en route et de déconnexion (t-marche(n) et t-arrêt(n)) calculés pour ces valeurs théoriques (max.théorique et min.théorique) sont mémorisés dans une unité de stockage, et **en ce que**, en cas d'une variation des valeurs théoriques de température (max.théorique et min.théorique), l'unité de stockage est alors interrogée pour savoir si, pour les valeurs de température théoriques modifiées (max.théorique et min.théorique), des n-ièmes instants de mise en route et de déconnexion (t-marche(n) et t-arrêt(n)) sont déjà mémorisés, lesquels sont ensuite pris en charge pour la première exécution du procédé de réglage avec les nouvelles valeurs théoriques comme des instants de mise en route et de déconnexion.

11. Procédé de réglage selon l'une quelconque des revendications 1 à 10, **caractérisé en ce que** le calcul de n-ièmes instants de mise en route et de déconnexion (t-marche(n) et t-arrét(n)) s'effectue au moyen d'une unité centrale d'analyse et de commande (24), au moyen de laquelle sont générées également des instructions de commande appropriées pour la mise en route et la déconnexion du système de régulation de température (10).

12. Procédé de réglage selon la revendication 11,
**caractérisé en ce que** les instructions de commande sont transmises par une liaison sans fil de l'unité centrale d'analyse et de commande (24) au système de régulation de température (10).

13. Procédé de réglage selon la revendication 11,
**caractérisé en ce que** les instructions de commande sont transmises par une liaison filaire de l'unité centrale d'analyse et de commande (24) au système de régulation de température (10).

14. Procédé de réglage selon l'une quelconque des revendications 1 à 13, pour des systèmes de régulation de température (10), parcourus par un agent de chauffage ou un agent réfrigérant, la température de l'agent de chauffage ou de l'agent réfrigérant étant réglable, **caractérisé en ce que**, à partir d'une part de l'intervalle de temps mesuré entre t-marche(n) et t-arrêt(n) (appelé ci-dessous durée de mise en route (D(n)), et d'autre part de l'intervalle de temps mesuré entre les valeurs extrêmes locales max.réel(n-1) et min.réel(n) si le système de régulation de température est utilisé pour le chauffage, ou de l'intervalle de temps mesuré entre les valeurs extrêmes locales min.réel(n) et max.réel(n) si le système de régulation de température est utilisé pour le refroidissement (appelé ci-dessous demi-cycle (HZ(n)), on calcule et on règle la différence nécessaire entre la température de l'agent de chauffage ou de l'agent réfrigérant et la température réelle (appelé ci-dessous avance de température (VT)), avec les étapes suivantes :
a) Si la durée de mise en route (D(n)) est inférieure au demi-cycle (HZ(n)) multiplié par un facteur (F), l'avance de température (VT) est abaissée d'une fraction (B) et la température de l'agent de chauffage ou de l'agent réfrigérant est modifiée en conséquence.
b) Si la durée de mise en route (D(n)) est supérieure au demi-cycle (HZ(n)) multiplié par un facteur (F), l'avance de température (VT) est augmentée d'une fraction (B) et la température de l'agent de chauffage ou de l'agent réfrigérant est modifiée en conséquence.
c) L'instant de déconnexion (t-arrêt(n+1)), défini selon les revendications 1 et 2, est redéfini de telle sorte que la durée de mise en route (D(n+1) est prolongée de la fraction (B) dans le cas a) et réduite de la fraction (B) dans le cas b).

15. Procédé de réglage selon la revendication 14,
**caractérisé en ce que**, au lieu d'un demi-cycle (HZ(n)), on mesure l'espace de temps entre les maxima locaux (max.réel(n-1)) et (max.réel(n)) (appelé ci-dessous cycle entier (GZ(n)) et ce cycle entier (GZ(n)) au lieu du demi-cycle (HZ(n)) est pris en compte dans le procédé décrit dans la revendication 14.

16. Procédé de réglage selon l'une quelconque des revendications 1 à 13 pour des systèmes de régulation de température (10) traversés par un agent de chauffage ou réfrigérant, la température de l'agent de chauffage ou de l'agent réfrigérant étant réglable, **caractérisé en ce que**, à partir de la première dérivée calculée en permanence de la courbe de température en fonction du temps dans le local, l'objet, le gaz ou le liquide chauffé ou refroidi, la différence nécessaire entre la température de l'agent de chauffage ou l'agent réfrigérant et la température réelle (appelée ci-dessous avance de température (VT)) est calculée et réglée, avec les étapes suivantes :
a) Calcul de la moyenne arithmétique à partir des valeurs des premières dérivées calculées de la courbe de température en fonction du temps dans la période comprise entre les valeurs extrêmes de température max.réel(n-1) et min.réel(n) (appelée ci-dessous moyenne.1) et au cours de la période comprise entre les valeurs extrêmes de température min.réel(n) et max.réel(n) (appelée ci-dessous moyenne.2).
b) Si la moyenne.1 est inférieure à la moyenne.2 multipliée par un facteur (F), l'avance de température (VT) est abaissée d'une fraction (B) et la température de l'agent de chauffage ou de l'agent réfrigérant est modifiée en conséquence.
c) Si la moyenne.1 est supérieure à la moyenne.2 multipliée par un facteur (F), l'avance de température (VT) est augmentée d'une fraction (B) et la température de l'agent de chauffage ou de l'agent réfrigérant est modifiée en conséquence.
d) L'instant de déconnexion (t-arrêt(n+1)), défini selon les revendications 1 et 2, est redéfini de sorte que la durée de mise en route (D(n+1)) est prolongée de la fraction (B) dans le cas b) et réduite de la fraction (B) dans le cas c).

17. Procédé de réglage selon la revendication 16,
**caractérisé en ce qu'**une valeur fixe est prédéfinie au lieu de la moyenne.1.

18. Procédé de réglage selon l'une quelconque des revendications 14 à 17 pour des systèmes de régulation de température (10) traversés par un agent de chauffage ou un agent réfrigérant ou exploités avec du courant électrique, la puissance de chauffage ou de réfrigération de l'agent de chauffage ou réfrigérant ou du courant électrique étant réglable, **caractérisé en ce que** le procédé décrit dans l'une des revendications 14 à 17 est appliqué avec la modification, consistant à augmenter ou abaisser la puissance de chauffage ou de refroidissement au lieu de l'avance de température (VT).

19. Procédé de réglage selon l'une quelconque des revendications 1 à 18, **caractérisé en ce que** le calcul de l'avance de température (VT) et de la température de l'agent de chauffage ou de l'agent réfrigérant ou de la puissance de chauffage ou puissance de refroidissement s'effectue au moyen d'une unité centrale d'analyse et de commande (24), au moyen de laquelle des instructions de commande appropriées pour le réglagè de la température de l'agent de chauffage ou de l'agent réfrigérant ou de la puissance de chauffage ou de refroidissement sont également générées et transmises par fil ou sans fil au système de régulation de température (10).
